# EUROPEAN PATENT APPLICATION

(11) **EP 1 024 661 A2**
(43) Date of publication of application: **02.08.2000**
(21) Application number: 00101533.8
(22) Date of filing: 26.01.2000
(51) Int. Cl.: H04N 5/445

(54) **Pictographic electronic program guide**

(30) Priority: 27.01.1999 US 238127
(71) Applicant: Hughes Electronics Corporation, El Segundo, California 90245-0956 (US)
(72) Inventor: Gagnon, Gregory J., Torrance, California 90277 (US); Toellner, Jon D., El Segundo, California 90245 (US)
(74) Representative: Grünecker, Kinkeldey, Stockmair & Schwanhäusser Anwaltssozietät

(57) **Abstract**

A system and method for displaying a pictographic program guide (PPG) to assist users in determining and selecting television viewing options and related services is described. The PPG is constructed at receiver stations based on data periodically received via a Direct-to-Home (DTH) satellite communication system. Preferably, the data decoder of the receiver station is a personal computer or a device having similar processing power. The PPG includes still pictures, live video broadcasts, still graphics, moving graphics, web pages, links and "buttons" that are utilized by the viewer to perform a variety of operations, including determining program availability, selecting programming or services, and launching to related information, programming or services. The PPG layout and organization is defined by one or more templates, and the basic instructions for building the templates are broadcast to the receiver stations. The PPG, according to the present invention, is constructed from both real time broadcast data ("streaming" data) and periodically downloaded and stored data ("file" data). By broadcasting the template information, along with instructions or linking-data on how to fill in the template using the streaming and file data, the broadcaster can easily change the PPG presentation format by changing the broadcast template information.

## Description

### BACKGROUND OF THE INVENTION

### (a) Field of the Invention

The present invention relates in general to entertainment broadcast systems that transmit and receive a wide variety of video, audio, software and other types of data. More particularly, it relates to a multi-channel broadcast system that transmits a video/text/graphic-based program guide data stream that is used at viewer stations to generate a user interface that facilitates a user's selection of various programs and services.

### (b) Description of Related Art

The use of electronic communications media to provide access to large amounts of video, audio, textual and data information is becoming more frequent. For example, the public switched telephone network (PSTN) is routinely used to transmit low speed digital data to and from personal computers. Cable television infrastructure is used to carry, via coaxial cable, analog or digital cable television signals, and may also be used to provide high speed Internet connections. In general, cable television infrastructures include many head end or transmission stations that receive programming from a variety of sources, then distribute the programming to local subscribers via a coaxial cable network. Large Direct-to-Home (DTH) satellite communications systems transmit directly to viewers over one hundred fifty audio and video channels, along with very high speed data. DTH systems typically include a transmission station that transmits audio, video and data to subscriber stations, via satellite.

One particularly advantageous DTH satellite system is the digital satellite television distribution system utilized by the DIRECTV® broadcast service. This system transports digital data, digital video and digital audio to a viewer's home via high-powered Ku-band satellites. The various program providers send programming material to transmission stations. If the programming is received in analog form, it is converted to digital. The transmission stations compress the digital video/audio programming (if needed), encrypt the video and/or audio, and format the information into data "packets" that are multiplexed with other data (e.g., electronic program guide data) into a plurality of bitstreams, which include identifying headers. Each packetized bitstream is modulated on a carrier and transmitted to a satellite, where it is relayed back to earth and received and decoded by the viewer's receiver station. The receiver station includes a satellite antenna and an integrated receiver/decoder (IRD). The IRD may be connected to appropriate output devices, typically including a video display.

In general, DTH satellite(s) broadcast on several frequencies from multiple transponders at differing polarizations (e.g., left and right hand circular polarization), and each transponder bitstream includes the video and audio data packets (in a compressed format) for several different programs (or "viewer channels"). For example, transponder one may broadcast the digital video and audio data packets for ESPN, TNT, AMC, A&E, E!, STARZ and USA, in a statistically multiplexed fashion. Satellites or other distribution systems which require separate input processing (e.g., satellites at two separated locations requiring different antennas) may also be used. Accordingly, in order to receive a desired viewer channel, the receiver station must know the transponder frequency and the polarization at which the desired signal information is being broadcast by the satellite, along with the identifying header information for those data packets on that transponder that relate to the desired program to permit its isolation from the multiplexed bitstream.

Each satellite transponder broadcasts a program guide data stream, which typically includes not only broadcast schedule data, but also the aforementioned information that the receiver station needs in order to tune to a particular channel. The program guide data stream is broadcast on all satellite transponders so that channel selection information is always available to the IRD regardless of the channel to which the IRD is tuned.

The data packets are distinguished from one another by their header information, which is referred to as the packet's "service channel ID" (SCID). For example, if a viewer instructs the IRD to display ESPN, the IRD, via the tuning information in the program guide data stream, determines the transponder frequency and polarization at which the ESPN programming is broadcast, along with the SCIDs of the data packets that are needed to generate and display the video, audio, and data content of the ESPN program.

The scheduling data in the program guide data packets also provide channel and program-attribute information that is used by the IRD to construct and output as a viewable display (which may be a full or a partial screen) a text-based listing of programming channels, times, titles, descriptions, ratings, etc. In operation, a program guide display is typically presented as a grid having channels listed along the left, times across the top, and program titles shown within the grid squares. Users can scroll through the grid, either up and down (by channel) or to the left and right (by time). Channels can be selected by inputting the channel number directly using the number keys on a user's remote control, or channels may be selected from the program guide display by highlighting and selecting a currently broadcast program that is listed in the grid. In either case, the IRD tunes to the chosen channel by accessing the channel's transponder (frequency), polarization, and SCID information denoted by the program guide data stream.

An extension of known IRD equipment is a PC-based system that allows users to receive, directly into their PC's, the same digital video, audio, and related information signals received in conventional DTH systems. The receiver station in this PC-based system includes a local satellite receiver dish similar to that of a conventional IRD system, but the IRD functions are implemented within the PC architecture through the use of one or more circuit boards that are inserted into the PC. The decoded outputs from these boards are displayed on the PC's monitor, or may be output to a conventional video display (e.g., a television set) and/or other mass storage medium such as magnetic tape, digital video disk (DVD), optical or magnetic disk, video recorder (VCR), etc. Because the receiver station includes a personal computer, a large number of additional data and software-related services can also be downloaded directly to the PC, thereby offering a variety of services, including broadcast programming, pay-per-view events, audio programming, data services, webcasting, software downloads and other data or software-related services.

One example of a known electronic program guide is described in U.S. Patent No. 5,633,683, entitled "Arrangement And Method For Transmitting And Receiving Mosaic Video Signals Including Sub-Pictures For Easy Selection Of A Program To Be Viewed", issued May 27, 1997 to Rosengren et al. The Rosengren et al. patent discloses a video-based electronic program guide, wherein the available programs are conveyed to the viewer by displaying a so-called "mosaic" made up at the broadcast site of the live video from each of the transmitted channels. The mosaic is essentially a single image divided into a plurality of areas, wherein each area displays the live video of one of the available programs. A user selects a channel by moving a cursor over the video area displaying the desired programming, then pressing a select button on either the television or the user's remote control. The selected live video image is then tuned and displayed. In an alternative embodiment, the live video in any area of the mosaic is automatically replaced with a still picture of the program if it is determined that the live broadcast is currently a commercial instead of the actual program.

Another video-based electronic program guide is disclosed in a European patent application entitled "Television Signal Transmission And Reception System With Multi-Screen Display For Tuning Operation," published May 25, 1994 and bearing publication no. 0 598 576 A2 (filed by Toshiba). The Toshiba EPO application, like Rosengren et al., discloses a video-based electronic program guide wherein the available programs are conveyed to the viewer by displaying a so-called "multi-screen" display made up at the broadcast site of live video from each of the transmitted channels. The multi-screen is essentially a single screen divided into a plurality of areas, wherein each area displays the live video of one of the available programs. A user selects a channel by moving a cursor over the video area corresponding to the desired programming, then pressing a select button on either the television or the user's remote control. The selected live video image is then tuned and displayed in the full screen. In an alternative embodiment, the video-based program guide is applied to a two-way CATV system, and the viewer's initial request for program guide information is sent back to the broadcast center which transmits to the viewer a text listing of categories into which the available programs and channels have been divided. The viewer selects a category, and this category selection is transmitted back to the broadcast center which may then transmit another listing of subcategories related to the chosen category. The viewer continues to select subcategories until no further subcategories are available, at which time the broadcast center transmits a multi-image screen containing only the video images from those programs that fall in the selected category and subcategories.

U.S. Patent No. 5,523,796, entitled "Video Clip Program Guide" and issued to Marshall et al. on June 4, 1996, discloses a text-based program guide laid out in a grid. Video clips from certain programs are stored at the viewer's station, and the programs that have video clips available are shown in the grid program guide with an icon next to the program's title. A viewer who desires to see a video clip selects the icon associated with the program, and the viewer station runs the video clip in a portion of the screen. The rest of the screen displays text information such as the program's title, channel, start and end times, content description, etc. Other program guide and/or multi-image systems are disclosed in U.S. Patent Nos. 5,231,493; 5,422,674; 5,398,074; 5,430,486; 5,434,624; 5,442,398; 5,452,012; and 5,047,867.

While known program guides have advantages, there is still room for improvement, particularly when considering the large number of data, software, video, audio, pay-per-view and other programming services available through present and future DTH satellite broadcast services. For example, the viewable display generated from electronic program guide data tends to be presented primarily as text laid out in a grid. The processing power of currently available IRD's, while appropriate for current DTH programming services, inherently limits how the program guide can be displayed, how much information can be incorporated into the guide, and how quickly and efficiently a user can move through the guide. These program guides are therefore essentially limited to conveying program availability and tuning information, and do not have the organization and flexibility to effectively support other services such as software downloads, webpage links and downloads, data services, and other functions.

Accordingly, for broadcast systems having a large number of services that deliver a large amount of data to relatively sophisticated receiver stations (e.g., a PC), there is a need for a broadcast electronic program guide and an associated viewable display format and content that significantly enhances how the program guide can be displayed, how much information can be incorporated into the guide, and how quickly and efficiently the user can move through the guide.

### SUMMARY OF THE INVENTION

The present invention provides a method and apparatus for efficiently and effectively transmitting, receiving, organizing and selecting transmitted data. The method and apparatus of the present invention is preferably embodied in a user interface and related data protocols and procedures. The user interface may be implemented in the context of a wireless distribution system for securely, reliably and inexpensively distributing video, audio, data service, software and other services to geographically remote receiver stations. The wireless distribution system is preferably a DTH digital satellite television distribution system, though other systems (e.g., terrestrial wire, cable, or wireless broadcast) may also be used in other embodiments. A typical DTH digital broadcast system includes a transmission station, a satellite relay, and a receiver station. At the transmission station, video and audio programming signals are digitized in known manners, multiplexed with other data signals (such as the data needed to construct a program guide display according to the present invention), compressed (if required), encoded, mated with error correction codes, modulated on carriers, and uplinked to a geosynchronous satellite. The satellite receives the uplinked signals and rebroadcasts them over a footprint that preferably covers a predetermined geographical area, for example, the continental United States. Receiver stations, which are typically located at the user's home or business, receive the satellite signals. The receiver stations each include an antenna, which preferably is in the form of a satellite dish, along with an integrated receiver/decoder (IRD). The antenna feeds the received satellite signal to the IRD unit which recovers the originally transmitted digital video, audio, and data. Other receiver station equipment (e.g., cable decoder units) may be used with other distribution systems in other embodiments, as is well known in the art.

The present invention is particularly applicable to a receiver station having sufficient processing power to process and generate a program guide display and associated features that goes beyond conventional video/text/grid program guides. The processing power may be incorporated directly into the IRD, for example, by adding a more powerful microprocessor, more memory, and associated software to the conventional IRD circuitry. Alternatively, the receiver station IRD may be replaced with a PC having circuit cards that perform the IRD functions. A PC-based system significantly increases the receiver station's processing power, along with the number of services (e.g., data services and software) the receiver station can receive and use. Accordingly, the features of the present invention are most advantageously utilized by a PC-based (or comparable) receiver station.

A PC-based receiver station suitable for use with the present invention includes an antenna, which preferably is in the form of a satellite dish, along with a PC which, like the above-described IRD, recovers the originally transmitted digital video, audio, and data. The digital broadcast data received from the satellite dish is coupled directly into a transport circuit board within the PC. The PC's transport circuit board also performs initial circuit functions on the signal coupled in from the antenna, including tuning, demodulation, and forward error correction (FEC). The transport circuit board within the PC also performs similar functions to that of the IRD's transport circuit, including channel de-multiplexing, decryption and access determination. The received digital broadcast data is sent from the transport circuit to video/audio decoder circuits, which may be on the same or separate circuit board. The video/audio decoder circuit board decompresses and/or decodes the received compressed broadcast signal.

In one embodiment of the present invention, the transmission station transmits to the receiver stations program selection data/information that is used at each receiver station to construct an electronic program guide and associated display format and content (i.e., a user interface) that, in contrast to known video-based and/or text/video/icon-based electronic program guides, significantly enhances how the program guide can be displayed, how much information can be incorporated into the guide, and how quickly and efficiently a user can move through the guide. The viewable display format, according to the present invention, incorporates moving picture video, still pictures, text, links to external data sources, graphics and other features that facilitate the selection of various programs and services.

The transmission station (e.g., uplink facility) transmits to the receiver stations the pictographic program guide (PPG) data/information needed at each receiver station to construct the PPG display. The broadcast PPG data can be divided into three categories. The first is real time conventional text/grid-based program guide data. The conventional guide data includes schedule and program attribute information, along with information that the receiver station needs in order to tune to a particular channel. In a typical DTH system, the conventional program guide data stream is broadcast on all satellite transponders so that channel selection information is always available to the receiver station regardless of what channel the receiver station is tuned to. In general, tuning the receiver station to a particular channel requires knowledge of at least the satellite transponder on which the channel is broadcast, along with polarization information and information identifying which data packets on that transponder correspond to the channel of interest.

The second category of broadcast PPG data may be referred to as "streaming" data, which is real time PPG data transmissions other than the conventional guide data. Streaming data can cover a variety of data types including, for example, "ticker" data (stocks, sports scores, etc.) and PPG "template" data (i.e., instructions to the receiver station on how to construct and lay out the display of the PPG).

The third category of PPG data may be referred to as PPG "file" data. PPG file data is periodically (e.g., once a day at 2:00 a.m.) downloaded to the receiver station and stored in memory. File data includes various information that is related to the PPG but is sufficiently static so that it does not need to be sent in real time. For example, the transmitted file data may be still pictures related to various channels and/or services and used to construct a portion of the PPG display, moving video clips related to the various channels and/or services and used to construct a portion of the PPG display, Web pages related to the various channels and/or services, and linking information that identifies and provides access to related information. The links may connect to either internal resources (e.g., cached Web pages) or to external resources (e.g., a URL to an external Web site). If the DTH broadcast system includes a software feature known as "webcasting," the file data may include a data catalog indicating the webcasting broadcast schedule. In general, webcasting involves accessing at the uplink a variety of web sites from the world-wide web, and broadcasting those web sites to the subscriber stations at selected times. Viewers wishing to receive a particular website would access the data catalog to determine the broadcast time and channel, and tune their receiver to that channel at the designated time.

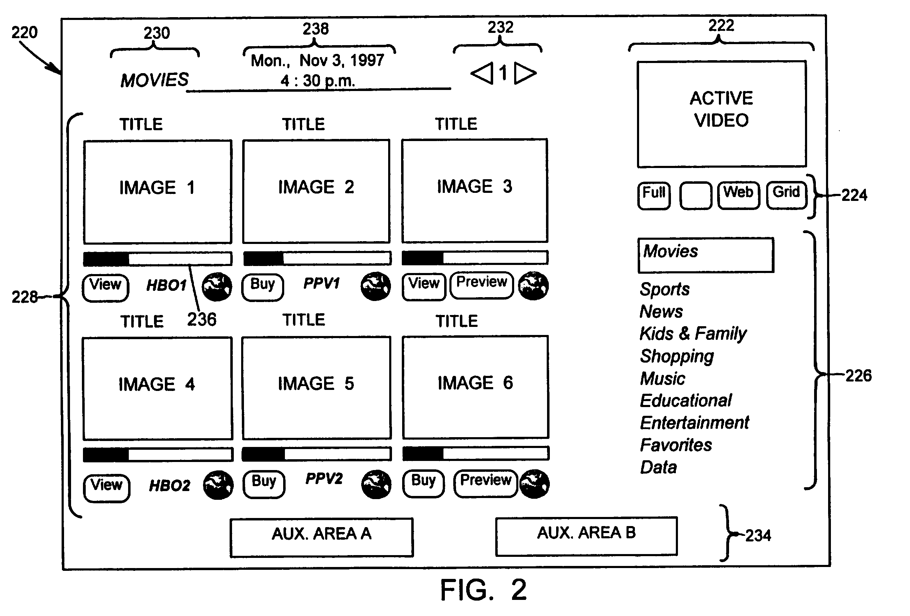

Several examples of a particular PPG template embodying the present invention are shown in FIGS. 2-5. As shown in FIG. 2, for example, the layout/content of the illustrated PPG screen 220 includes five major segments. The first segment is an active video segment 222 that displays the video/service channel to which the receiver is currently tuned. The second segment is a category segment 226. All of the available channels are divided into categories such as sports, movies, news, data services, etc., and these available categories are listed in the category segment 226. Each category has its own template instructions that may be different from or the same as the templates in other categories. If the number of programs/services in a given category is more than fits on a single template, additional templates in the form of additional template "pages" are created for that category. Selecting a particular category selects the template page(s) that present the programming/service that fall under that category. A third segment, the "page" segment 232, allows the user to move around the various pages of a template by selecting the page segment 232.

The fourth segment is a video/picture segment 228 shown as a matrix of six 3:4 aspect ratio areas each representing a programming channel or service channel that may be accessed by the receiver station. Selecting one of the video/picture areas selects the channel associated therewith. The areas are linked to the program guide tuning information in the same way that the display text-based grids and channel numbers are linked to the tuning information. Accordingly, selecting the video/picture area that represents ESPN, links the receiver to the program guide tuning information (transponder and SCID) needed to acquire the program currently being broadcast on ESPN. An additional feature is an information area that can pop up (overlaying a portion of the current display) whenever a cursor moves over a given video/picture area. The information area could provide any desired information about the program, for example, the title, program description, program duration, program rating, etc.

The fifth segment is the "link" segment, which can be found in various areas on a given screen. The "links" include graphical interface "buttons" and other graphic symbols for selecting certain features and/or launching the PPG into various states are provided for the active video segment 222, the video/picture segment 228 and special auxiliary areas 234, located at the bottom of a given template page. Each link, like the video/picture areas, represents a related channel, service or other information that can be accessed from the PPG. Selecting a link may initiate a series of local interactions involving primarily the receiver station hardware, or the link may initiate external interactions with other hardware/systems such as the Internet. For example, "web" links allow the viewer to either "pull-up" a related web page stored at the receiver station or launch to external equipment/systems to access the web-page information, grid-guide links allow the viewer to move from the PPG to the grid-guide, "preview" links allow the user to select and run video clips of the program in its video/picture area, "software" links allow users to download related software (e.g., computer games, applications software or web originated software), "view" links make a given picture area active, "full" links put the associated video/picture area in the full screen, "record" links use the broadcast time and channel information associated with a program to control a video recorder to record the program at its broadcast time, "buy" links allow users to purchase pay-per-view programming or services via conventional impulse-pay-per-view purchase screens, and data-catalog links take the user to the webcaster broadcasting schedule for the system.

The PPG, according to the present invention, is constructed from both real time broadcast data ("stream" data) and periodically downloaded and stored data ("file" data). By broadcasting the template information, along with instructions on how to fill in the template using the streaming and file data, the broadcaster can easily change the PPG presentation format by changing the broadcast template information. In operation, a user selects a category, and the channels that fall within the selected category are displayed according to a particular template format. The templates are a particular layout and configuration of graphics, still pictures, moving pictures and text representing the content of the channel and associated information and/or services. Selecting a portion of the PPG display selects the programming, channel, service or related data or operation represented by that portion of the display. Selecting a portion of the display can involve primarily local operations, or can launch to external devices/systems such as the Internet. Additionally, by limiting the number of video/picture segments that can be active at any time, the present invention avoids the confusion associated with known picture-based program guides that have from sixteen to twenty-five separate active video areas in a given screen of the guide. Thus, the program guide of the present invention provides an intuitive system and method for browsing and selecting television programming and a wide variety of broadcast services.

The invention itself, together with further objects and attendant advantages, will best be understood by reference to the following detailed description, taken in conjunction with the accompanying drawings.

### BRIEF DESCRIPTION OF THE DRAWINGS

FIG. 1 is a diagram of a direct-to-home (DTH) transmission and reception system capable of broadcasting and utilizing data streams embodying aspects of the present invention;
FIG. 2 illustrates an example of one "page" of a pictographic program guide embodying aspects of the present invention;
FIG. 3 illustrates an example of another "page" of a pictographic program guide embodying aspects of the present invention;
FIG. 4 illustrates an example of another "page" of a pictographic program guide embodying aspects of the present invention;
FIG. 5 illustrates an example of still another "page" of a pictographic program guide embodying aspects of the present invention;
FIG. 6 is a diagram of selected hardware processing components of the receiver station shown in FIG. 1;
FIG. 7 is a block diagram illustrating one possible system architecture within which aspects of the present invention may be used;
FIG. 8 is a diagram illustrating a type of transport data packet that may be transmitted via the system shown in FIG. 1;
FIG. 9 is a block diagram illustrating a preferred data flow through a protocol stack for use with the present invention;
FIG. 10 is a block diagram illustrating a preferred method of processing a data packet for use with the above-referenced protocol stack;
FIG. 11 is a representation of a BFDP header;
FIG. 12 is a representation of a UDP header;
FIG. 13 is a diagram of a version 4 IP packet header;
FIGS. 14A - 14D are block diagrams representing MPT packets;
FIGS. 15A and 15B are diagrams representing a BARP header and a BARP address record, respectively; and
FIGS. 16A - 16D are sample SDP + records for various information services that may be used with the present invention.

### DESCRIPTION OF THE PREFERRED EMBODIMENTS

To facilitate review and understanding of the invention and the preferred embodiments, the present disclosure has been organized in accordance with the headings and sub-headings shown below.
I. System Overview
II Pictographic Program Guide (PPG)
III. Receiver Station Generally
IV. Receiver Station Architecture
V. Data Packet
VI. Audio/Video Processing
VII. Data Processing
   A. Protocol Stack/Broadcast File Download Protocol (BFDP)
   B. Broadcast Address Resolution Protocol (BARP)
   C. SDP+ Records
   D. Webcast
VIII. Conclusion

### I. System Overview

By the way of example only, the method and apparatus of the present invention is disclosed in connection with a system that broadcasts, via satellite, video programming, data services and multimedia data (e.g., webpages). It should be understood, however, that any system requiring intuitive interactive program and/or service selection may alternatively employ the techniques shown herein. Such systems might include other broadcast communications techniques not traditionally associated with video programming or the Internet. For example, paging or cellular systems delivering news or other information could benefit from certain aspects of the method and apparatus of the present invention.

Generally, however, the techniques of the present invention are best used by broadcast video and data systems having a large number of available programs, data and services, thereby benefitting from the simplification of programming organization and selection provided by the present invention. A preferred broadcasting system is the satellite-based system utilized by the DIRECTV® broadcast service. Such embodiments of the present invention employ a satellite receiving antenna to acquire real-time video broadcasts and periodic data broadcasts used to construct a program guide display. It should be understood, however, that many other delivery systems are readily applicable to alternate embodiments of the present invention. Such systems include wired or cable distribution systems, UHF/VHF radio frequency systems or other terrestrial broadcast systems (e.g., MMDS, LMDS, etc.), and fiber optic networks.

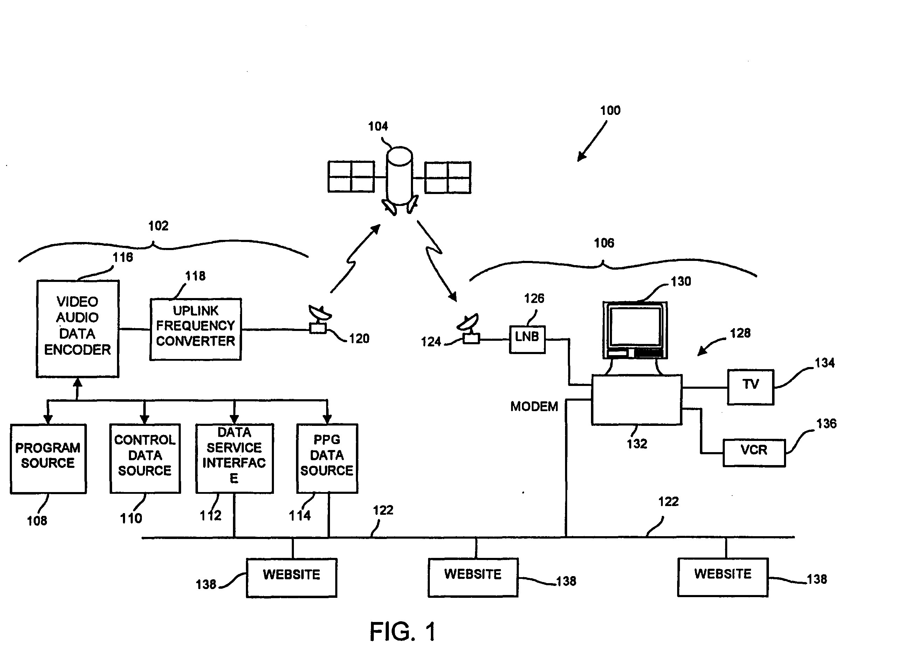

FIG. 1 illustrates a typical Direct-to-Home (DTH) PC-based satellite communication system 100 capable of utilizing the present invention. The system 100 includes a transmission station 102, a satellite/relay 104, and a plurality of receiver stations, one of which is shown at reference numeral 106. Wireless communications are provided between the transmission station 102, the satellite/relay 104, and the receiver station 106. The transmission station 102 includes programming sources 108, a control data source 110, a data service source 112, one or more program guide data sources 114, a video/audio/data encoding system 116, an uplink frequency converter 118, and an uplink antenna 120. The data service source 112 receives data service information and webpages made up of text files, graphics, audio, video, software, etc. from a network 122 (e.g., the Internet, a LAN or a WAN). The satellite/relay 104 is preferably at least one geosynchronous or geo-stationary satellite. The receiver station 106 shown in FIG. 1 includes a reception antenna 124 connected to a low-noise-block (LNB) 126, and an integrated receiver/decoder (IRD) embodied in a personal computer (PC) 128 having a monitor 130 and a computing unit 132. Other devices, such as another video display device (e.g., television) 134 and a video recorder 136 (e.g. VHS, DVHS, DVD, etc.), may also be supported, if desired.

In operation, the programming sources 108 receive video and audio programming from a number of sources, including satellites, terrestrial fiber optics, cable, or tape. The received programming signals, along with data signals from the control data source 110, the data service source 112, and the program guide data sources 114, are sent to the video/audio/data encoding system 116 where they are digitally encoded into information data streams that are multiplexed into a packetized data stream or bitstream using a number of conventional algorithms. Each data packet within the packetized data stream includes a header that identifies the contents of the data packet and a service channel identifier (SCID) that identifies the data packet. In a conventional manner, the encoded bitstream is modulated and sent through the uplink frequency convener 118, which converts the modulated encoded bitstream to a frequency band suitable for reception by the satellite/relay 104. The modulated, encoded bitstream is then routed from the uplink frequency converter 118 to the uplink antenna 120 where it is broadcast toward the satellite/relay 104. The satellite/relay 104 receives the modulated, encoded bitstream and re-broadcasts it downward toward an area on earth that includes the receiver station 106. The reception antenna 124 of the receiver station 106 receives the signal, which is typically shifted from, for example, the Ku-band signal down to, for example, an L-band signal by the LNB 126. The LNB output is then provided to the PC 128, the television 134 and/or the video recorder 136. As noted above, the PC 128 includes conventional IRD functions (provided, for example, by plug-in circuit cards (boards). Thus, when the user commands the PC 128 to tune to a particular program, the PC 128 associates the user's program selection with a transponder and SCID number and tunes the IRD to receive data packets from the appropriate transponder and to select data packets having the appropriate SCID number from the multi-program data stream.

Although not necessary for proper operation of the disclosed system, the receiver station 106 may optionally incorporate a connection (e.g., Ethernet circuit or modem) to the network 122 for transmitting requests and other data back to the transmission station 102 or other location (or a device managing the transmission station 102 and overall flow of data in the system 100) and for communicating with network devices 138 (e.g., websites) that may be on the network 122.

In general, the software executed by the PC 128 includes many conventional PC operations used to generate a pictographic program guide (PPG) having a mouse-controlled cursor or the like, windows, dialogue boxes, buttons, and other such features that facilitate user selection of various options. The PPG of the present invention is assembled using two basic types of external data: (1) real-time broadcast data (e.g. streaming data), and (2) file data (i.e., data that is periodically downloaded and stored). Real-time data includes conventional program guide data (e.g., program attribute data, tuning data, etc.), ticker data (e.g., stocks, sports scores, etc.), some SDP+ records, and announcements (e.g., updates to the webcast data catalog, etc.). File data includes information that is updated periodically such as still pictures, moving video clips, webpages, data catalog (webcast schedule), links to other internal or external sources of information, and various discrete software downloads. The PPG of the present invention organizes and simplifies the presentation of real-time broadcast data and file data by providing, inter alia, a plurality of pages, wherein each page has a display with several distinct segments. For example, a given page type may simultaneously provide still pictures, moving videos, text, graphics, audio, and data within separate segments.

The PPG of the present invention requires the presence of appropriate data at the receiver station 106. One method of generating appropriate data and reliably transferring it to the receiver station 106 using a hardware configuration as shown in FIG. 1, is disclosed in detail below in section VII of this disclosure. Generally, the method set forth in section VII includes a data transfer technique, referred to herein as broadcast file download protocol (BFDP), that operates in a one-way broadcast communication link. BFDP is the subject of a co-pending commonly assigned application entitled , filed on and bearing serial no. / . BFDP breaks large data files for transmission into numerous small data packets, which are labeled in a sequential manner at the transmission station 102 and broadcast to the receiver station 106. BFDP facilitates the assembly of the labeled data packets back into the large data file and enables identification of missing or corrupt data packets at the receiver station 106. Any missing or corrupt data packets at the receiver station 106 can be obtained and inserted into their correct locations in the large data file during subsequent transmissions of the large data file. Thus, if during the transmission of a large data file a number of its data packets are missing or corrupt, only the missing or corrupt data packets need be reacquired during a subsequent re-broadcast of the large data file, and not the entire large data file.

A method for resolving an Internet protocol (IP) address into a physical address is also described in section VII of this disclosure. This method is referred to herein as a broadcast address resolution protocol (BARP). BARP is the subject of a co-pending commonly assigned application entitled , filed on and bearing serial no. / . BARP is necessary because all file data (for example a large file transferred using BFDP, as discussed above) transferred to the receiver station 106 are identified by IP addresses and, as previously noted, the receiver station 106 requires a transponder and SCID to tune to receive the broadcast file data. Accordingly, BARP allows the receiver station 106 to rapidly resolve an IP address for a desired program or service into a transponder and SCID.

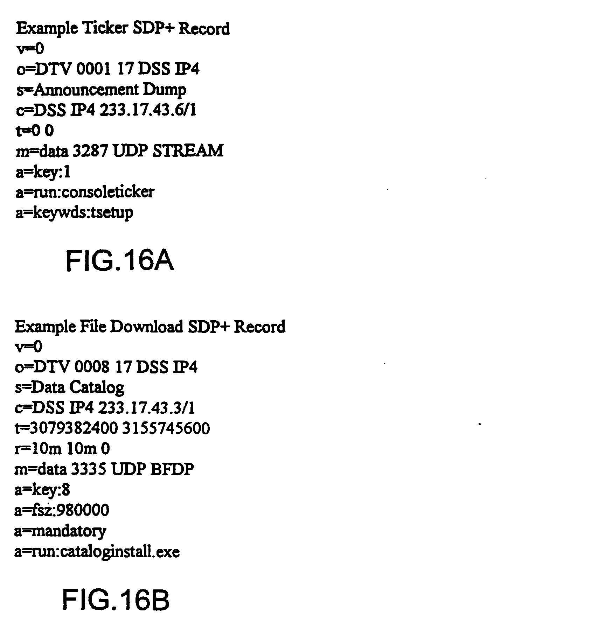

To inform the user of when and on what IP address the large file mentioned above will be broadcast, session description protocol plus (SDP+) records are periodically broadcast by the transmission station 102. SDP + records are the subject of a co-pending commonly assigned application entitled , filed on and bearing serial no. / . SDP + records are processed by the receiver station 106 to produce a schedule of all data service information that will be broadcast by the transmission station 102. Additionally, the SDP + records are used by the PC 128 to build PPG pages using selected information resident within the PC system (e.g., a basic page template) and selected dynamic data that is received from the satellite or an Internet connection. When the user launches the interface into another state or page, the PPG builds the destination page as instructed by the SDP + records and displays it on the user's PC system monitor 130. More details about the SDP + records are provided in Section I of this disclosure in connection with the descriptions of FIGS. 16A-16D.

### II. Pictographic Program Guide (PPG)

Several examples of a particular PPG template embodying aspects of the present invention are shown in FIGS. 2-5. As shown in FIG. 2, for example, the layout/content of the illustrated PPG page 220 includes five major segments. The first segment is an active video segment 222 that displays the video/service channel to which the receiver is currently tuned. As shown in FIG. 2, a plurality of graphic buttons or links 224 may be displayed adjacent to the active video image 222. These graphic buttons or links 224, when selected by the user, launch the PPG into one of a plurality of corresponding states that provide additional services or data associated with the active video image 222. For example, selecting a "Grid" button transitions the active video/audio area 222 to the program grid-guide. Selecting a "Full" button may zoom the active video segment 222 to occupy a substantial portion of the display. Selecting a "Web" button could replace the video/picture segment 222 with a web page related to the currently tuned channel. For example, the "web" button could bring up on an available area of the template a list of available web pages. The list of available web pages could replace the list of categories in a category area 226 that is discussed in more detail below. Also, as discussed in more detail below, selection of the "Web" button could invoke the retrieval of webpage information that is locally cached at the PC 128 or may, alternatively, invoke the PC 128 to access various websites 138 via the Internet connection 122 to download and display webpage information as needed.

The second segment of the template 220 is the category segment 226. All available channels are classified into topics and displayed in the category segment 226 as a list of categories that includes, but is not limited to, sports, movies, family, travel, favorites, news, data services, category related web pages, etc. Topic classifications could be directed by the broadcaster, by the user, or a combination thereof. For example, a user may create a 'Favorites' category and fill it by dragging a video area from a video/picture segment 228 to the category list 226. In other embodiments, a favorites category is automatically constructed via software resident in the PC 128 that observes the user's viewing habits.

The user selects a category by positioning a cursor using a selection device such as a mouse, keys, or remote control to highlight the desired category for display. The currently selected category is displayed in an area 230 of the page 220. Each category has its own template instructions that may be different from or the same as the templates in other categories. Thus, the layout, graphics, and other content of the various templates can be optimized for the subject matter of each category. For example, the template for the "News" category could include a late breaking news banner in a portion of the display, whereas the template for the "Shopping" category could include a promotional banner advertising/featuring various products and services.

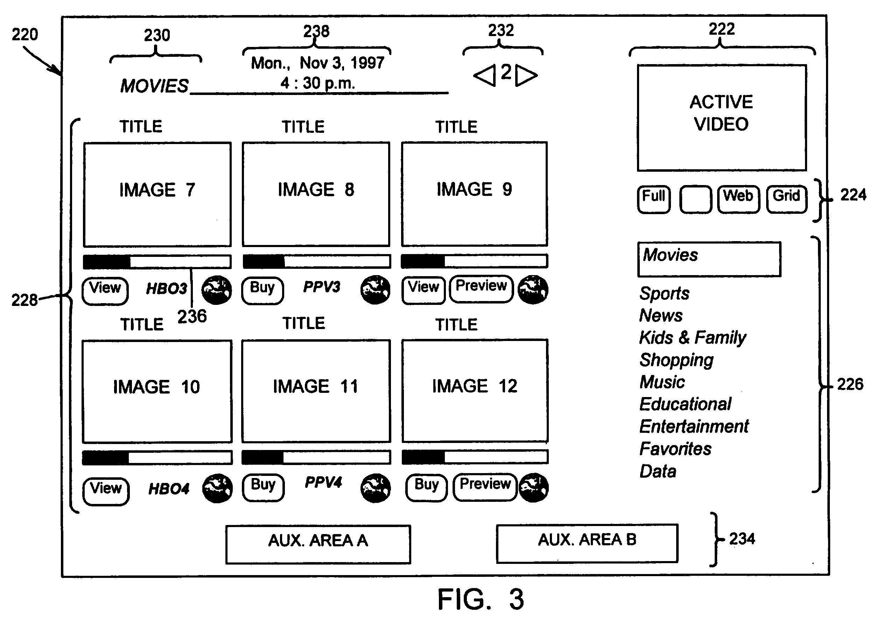

If the number of programs/services in a given category is more than fits on a single page additional pages are created for that category. Selecting a particular category selects the template page(s) that present the programming/service that fall under that category. A third segment, the "page" segment 232, allows the user to sequence through the various pages associated with a selected category template. The user may, for example, select a right facing arrow to advance through the associated pages and a left facing arrow to return to previous pages. A second page associated with the page shown in FIG. 1 is illustrated, for example, in FIG. 3.

The fourth segment is the video/picture segment 228 that preferably includes a matrix of six 3:4 aspect ratio areas each representing a programming channel or service channel, associated with the currently selected category, that may be accessed by the receiver station 106. Each video area could include still pictures, still graphics, moving graphics, live broadcasts, text, or a combination thereof representing the content of the program currently being broadcast on that channel, or for some program that will be broadcast on that channel in the future.

Delivery of the video/picture area may be accomplished via the live video broadcast, such as by freezing a frame or displaying live action or periodically sampled video. However, in preferred embodiments, the pictogram representing the program is selected by the program provider, broadcaster, or others to be a preferred, symbol, graphic, picture or other pictogram illustrative of the program content. In these embodiments, the pictogram data may be broadcast independently of the program content (e.g., well in advance for guides showing upcoming programs) via broadcast data, retrieved data, or a combination thereof. One or more of the video areas can be made "active" (i.e., the live broadcast) according to user's desires and the decoding capabilities of the user's video/audio decoder hardware/software. Accordingly, the user can have as many active video areas as desired.

Selecting one of the video/picture areas selects the channel associated therewith and displays it in the active video segment 222. The video/picture areas are linked to the conventional program guide tuning information in the same way that known text-based program grids and channel numbers are linked to the tuning information. Accordingly, selecting the video/picture area that represents ESPN, for example, links the receiver 106 to the conventional program guide tuning information (channel frequency, polarization, header ID, etc.) needed to acquire the program currently being broadcast on ESPN.

An additional feature of the video/picture segment 228 is an information area that can pop up (i.e., a child window) whenever a cursor rolls over a given portion of a video/picture area. The information area may provide any desired information about the program, for example, the title, program description, program duration, program rating, etc. Such information is typically broadcast in conjunction with known guide systems to provide users with information regarding a program.

The fifth segment is a "link" segment, which can be found in various areas on a given screen. Links (including graphical interface "buttons" for selecting certain features and/or operations) may be provided for the active video segment 222 and/or special auxiliary areas 234 located at the bottom of a given template page. In one embodiment of the present invention, links may be provided in association with (e.g., within or adjacent to) one or more of the video/picture segments 228.

When the user selects a link an action is taken. For example, "web" links may be provided that allow the viewer to "pull-up" a related webpage previously downloaded from the satellite 104 and cached in the PC 128, or that is retrieved via the network connection 122 when requested. Alternatively, selecting the "web" link could bring up on an available area of the template 220 a list of available web pages. When "grid-guide" links are selected, a conventional grid-based program guide is displayed to the user. When "preview" links are selected, the user may select and run previously stored or retrieved video clips of the program in its video/picture area. When "software" links are selected, the user may download related software (e.g., computer games, applications software or web originated software). For example, a "computer disk" button/link could be used for accessing the data catalogue of webcaster broadcasts, downloading software the next time it is broadcast, retrieving or purchasing software already cached, or for retrieving software over the network connection 122. "View" links could make a given picture area active, "full" links may expand the associated video/picture area to occupy a substantial portion of the full screen, "record" links may use the broadcast time and channel information associated with a program to control a video recorder to record the program at its broadcast time, "buy" links may allow users to purchase pay-per-view programming or services via conventional impulse-pay-per-view purchase screens, for example, a "dollar sign" button/link could be used to launch an impulse pay-per-view process for pay-per-view programs. "Data-catalog" links could take the user to the webcaster broadcasting schedule for the system. A "lock" link could be used for controlling access to programs, for example by limiting movies to no higher than a PG-13 rating (ratings information is obtained from the grid-guide datastream). A "star" link could be selected to bring up a list of the cast in the current show. A "video tape" link could be used to launch automatic VCR programming by accessing the channel and time information from the grid-guide datastream and using that information to control the recording features of the VCR 136. A "checkbox" button/link could be used to add to a list of favorites stations or to configure a viewing agenda. A "question mark" button/link could be used for displaying additional information associated with the program, such as times, ratings, and a textual synopsis. Thus, the various links may be selected and activated by the user to launch the PPG between various states or pages. Of course, there are many other links and associated actions that could be provided.

In accordance with the present invention, a time line 236 may be provided adjacent to one or more of the active video areas 228. The time line 236 may indicate the progress of the currently running program. For example, the ends of the time line 236 may represent the respective start and finish times of the currently running program and a shaded portion of the time line 236 may correspond to the time elapsed from the start time to the current time. Thus, a user may quickly determine how much of a currently running program is available for viewing before making a viewing selection/purchase. In some embodiments, the user may be prevented from buying a pay-per-view program, for example, if less than 50% of the program remains to be broadcast.

In other embodiments, the time line 236 may be used to select a viewing time for a video/picture area. In these embodiments, scrolling back and forth in time is accomplished with arrow links, and jumping to a particular time can be performed, for example, via a calendar (not shown) that pops up when a calendar link is selected. Of course, any time selection metaphor could be used. The current time is the default, however, going forward in time allows for agenda planning, VCR programming, etc. The video picture in the video area automatically changes to the pictures appropriate for the requested guide time-frame.

The current date and time are displayed in a date/time segment 238. Moving the display time for all of the video/picture areas at once could be accomplished via a calendar or time bar or menu that could be accessed by, for example, double-clicking a mouse control on the date/time segment 238.

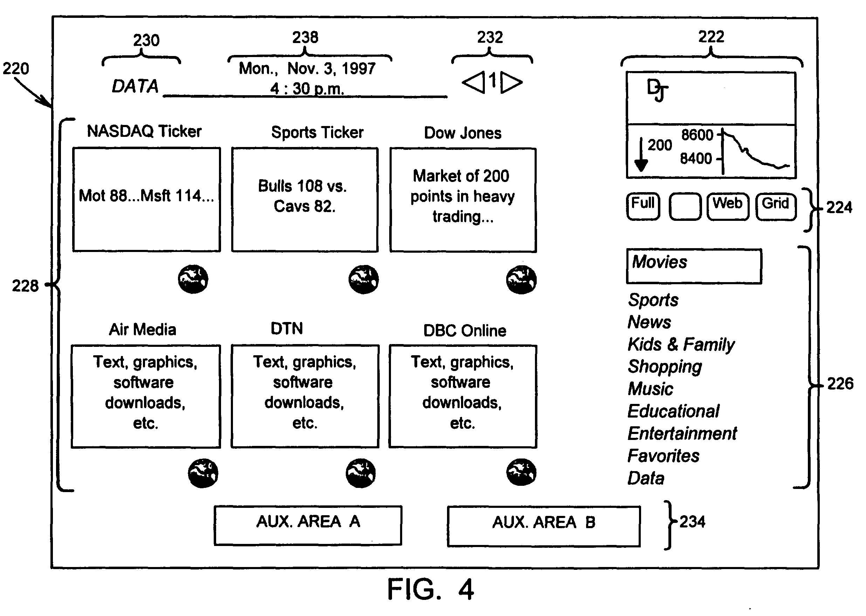

FIG. 4 illustrates, by way of example only, the "data" category template of one embodiment of the present invention. The video/picture segment 228 display various data delivery services. For example, a NASDAQ service channel displays a stock ticker with recent stock symbols and prices, and a sports ticker shows scores for games currently being played. The data delivered by these services is updated periodically and scrolls across the various video/picture areas 238. Persons of ordinary skill in the art will appreciate that text, graphics, video, sound, and software can be combined in various combinations to deliver content associated with data delivery services. For example, breaking CNN news headlines with video/audio clips could be transmitted as file data and stored in a designated memory location of the PC 128. Viewer's are notified of the general nature of the story and the availability of the news clip by a scroll across the live video feed for CNN, or by a pop-up "breaking news" link/button, or some other method. The viewer can access the video clip by clicking the button/link. Similarly, software (e.g., a game or new version of a spreadsheet application) could be requested and downloaded.

At the bottom of each template 220 shown in FIGS. 2-4 are auxiliary areas 234. These areas can be used in a variety of ways, such as for additional templates/buttons, advertisements, special messages, and other communications. These areas can also be used to allow various PPG services and/or operations to be launched without having to alter the basic template presentation. For example, if an impulse pay-per-view operation is initiated, the purchase screens from the grid-guide datastream could be displayed in the auxiliary areas 234 instead of the video area for that channel or the full screen, thereby allowing the purchase to proceed while still viewing the basic PPG template. Or, if a software game associated with the channel is downloaded, it can be launched and run in the auxiliary areas without having to exit the current PPG template.

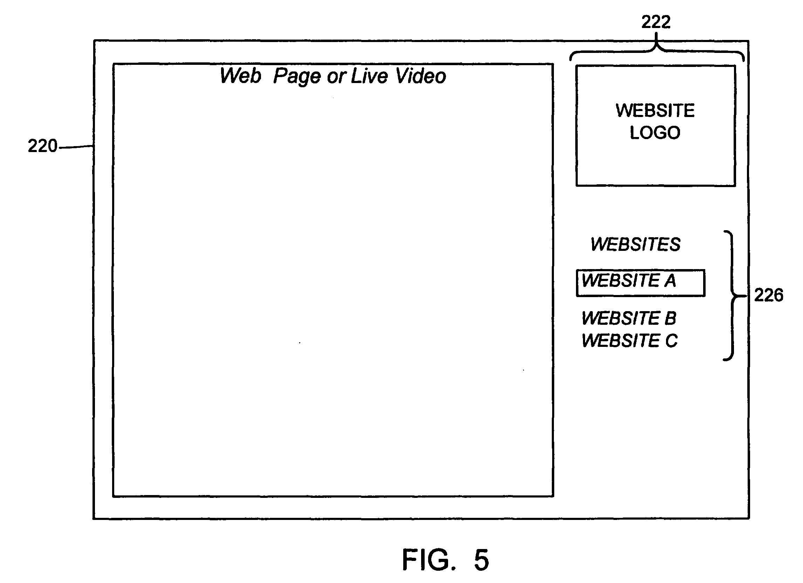

FIG. 5 shows one example of a box occupying the video/picture segment 220 where enlarged live video or a web page are displayed in response to the selection of the "Full" or "Web" buttons respectively. In the present embodiment the active video segment 222 can be replaced with a logo associated with the current channel or web page, and the category segment 226 lists web pages associated with the current category. A "category" button/link under the active video/audio segment 222 allows the user to return the category segment 226 to a list of categories, thereby allowing the user to return the screen to a particular category template.

### III. Receiver Station Generally

As noted above, the PPG of the present invention is preferably implemented within a DTH PC-based satellite communication system 100 such as that depicted generally in FIG. 1. Discussed in more detail below is a preferred system and method for executing the PPG software of the present invention. In particular, a preferred receiver station 106 architecture is disclosed. In addition, preferred data transmission methods that facilitate the PPG's ability to receive and manage the large amount and variety of digital information that is broadcast within the DTH system 100 are disclosed.

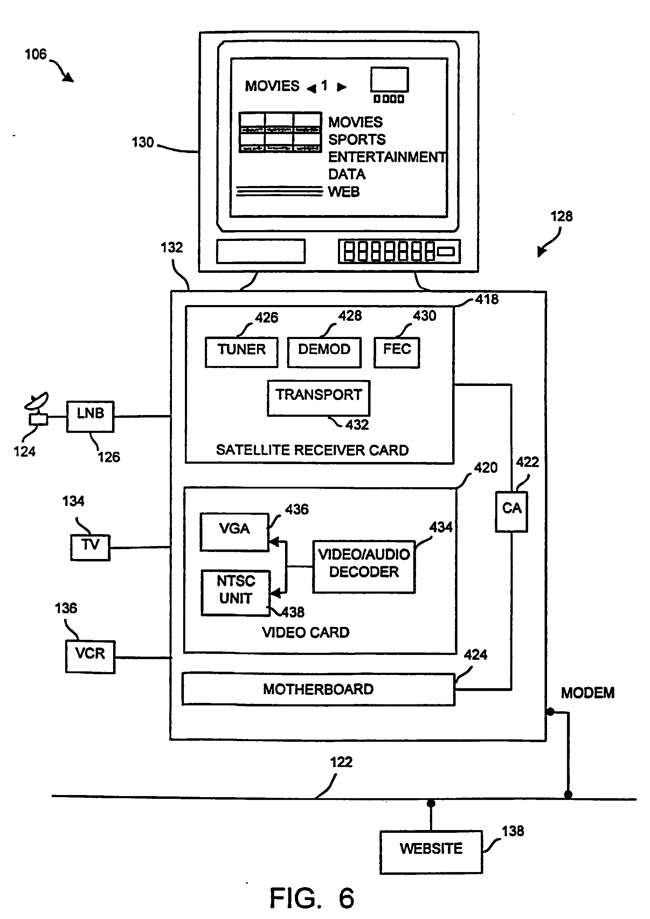

FIG. 6 is a detailed illustration of a preferred implementation of the receiver station 106 shown in FIG. 1. As shown, the receiver station 106 includes the reception antenna 124, the LNB 126, and the PC 128. The PC 128 includes the monitor 130 and the computing unit 132, which may have a modem connection via the PSTN to the network 122. The computing unit 132 includes, inter alia, a satellite receiver card 418, a video/audio decoder card 420, which may be integrated with the receiver card 418, a conditional access card 422, a mass memory such as a hard disk (not shown), and processing/control capabilities such as a PC motherboard 424. The satellite receiver card 418 includes a tuner 426, a demodulator 428, a forward error correction (FEC) decoder 430, and a transport functional processing block 432. The video/audio decoder card 420 includes a video/audio decoder 434, an optional NTSC and/or ATSC output driver 438, and a VGA output driver 436. The satellite receiver card 418 and video/audio circuits (e.g., video/audio decoder card 420) perform the functions of receiving and decoding the signal received from the LNB 126. The incoming signal is received by a satellite receiver card 418 and passed through a series of initial processing operations including the tuner 426, the demodulator 428, and the forward error correction decoder 430, before passing to the actual transport functional processing block 432. Although the functional circuits within the transport functional processing block 432 are not illustrated, they are identical to the channel demultiplexing, decryption, and access determination circuit blocks of a standard transport decoder. For example, the transport functional processing block 432 receives the transport stream or bitstream of digitized data packets containing video, audio, scheduling information, and other data. The digital packet information contains identifying headers as part of its overhead data. Under control of the PC's main processor/controller (typically located on the PC motherboard 424), the transport functional processing block 432 filters out received data packets that are not currently of interest. Received data packets that are of interest are routed through decryption and access control operations within the conditional access card 422. Access control may be provided by any known means. For example, access control may be achieved by requiring a data packet to have a proper authorization code in order to be passed to the video/audio decoder card 420.

The transport functional processing block 432 passes the data to the video/audio decoder 434 of the video/audio decoder card 420. The authorized data of interest are stored in system RAM (not shown) for buffering, and the video/audio decoder 434 retrieves the data from RAM as needed.

The allocation of memory and control functions may be arbitrarily divided between the PC system's function cards (e.g., the satellite receiver card 418, the video/audio decoder card 420, etc.). Thus, a substantial amount, or possibly all, of the control and memory functions for operation of the present invention may be integrated within a single card, or alternatively, may be incorporated within the PC motherboard 424. When needed, the data is routed to the video/audio decoder 434, which includes display circuitry. For video data, the video/audio decoder 434 reads in the compressed video data from its RAM, parses it, creates quantized frequency domain coefficients, then performs an inverse quantization, inverse discrete cosine transform (DCT) and motion compensation. At this point, an image has been reconstructed in the spatial domain. This image is then stored in a frame buffer in the video decoder's RAM. At a later time, the image is read out of the frame buffer and passed through the display circuitry to the VGA output driver 436 and optionally, to the NTSC and/or ATSC output driver 438. The display circuitry also generates the graphics that allow text such as the PPG electronic program grid guide data to be displayed.

### IV. Receiver Station Architecture

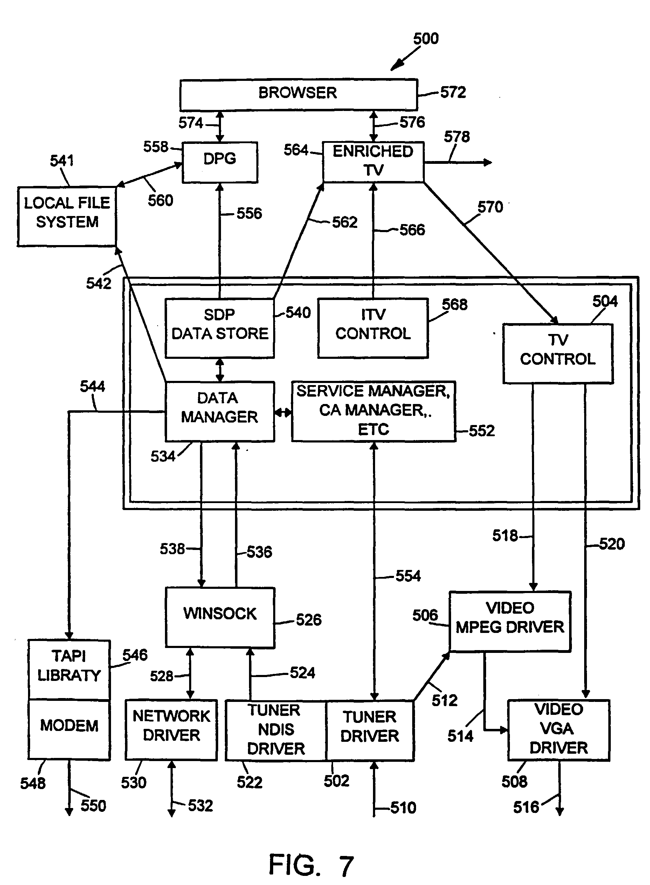

Illustrated in FIG. 7 is a system architecture block diagram 500 depicting, by way of example only, a preferred organization of the PC's computing unit hardware and software which may implement aspects of the present invention. A tuner driver 502, a TV control block 504, a video MPEG driver 506, and a video VGA driver 508 provide the major functions of a conventional integrated receiver decoder (IRD). The tuner driver 502 receives a digital signal modulated on an RF carrier (e.g., a digital satellite downlink signal) on line 510, and performs known IRD functions to parse out and selectively control the flow of conditional access, video/audio, and MPT data streams. The tuner driver 502 passes selected video/audio data packets to the video MPEG driver 506 on line 512. The MPEG driver 506 controls the MPEG decoding hardware, synchronizes video and audio data, and manages the buffering of video and audio data to be displayed. The MPEG driver 506 passes decoded video information to the video VGA driver 508 via line 516. The VGA driver 508 processes the decoded video information 514 and provides a display signal that may be, for example, a standard RGB output on line 516. The TV control block 504 controls the size and location of the video window via an MPEG decode control signal on line 518 and a VGA window display control signal on line 520 that are passed to the video MPEG driver 506 and the video VGA driver 508 respectively.

With respect to file data, the tuner driver 502 passes file data (e.g., websites, software, etc.) as MPT data packets to a tuner NDIS driver 522. The NDIS driver 522 strips the MPT header and passes standard IP data packets 524 using Microsoft® NDIS protocol to a standard Windows® Winsock® interface 526. File data 528 may alternatively be passed to the Winsock® interface 526 as IP data packets via a network driver 530 that exchanges information with a network connection 532 that may, for example, be an Ethernet, ISDN, or POTS connection.

A data manager 534 functions as a data distributor or data hub. The data manager 534 receives and interprets file data from line 536. The data manager 534 further provides an optional HTTP proxy service via line 538, uses an SDP + data store 540, and schedules data-related tuning requirements. The data manager 534 may store data files (e.g., HTML, GIF, etc.) on a local file system 541 (e.g., a hard disk) via a fifth data path 542.

The data manager 534 may use a TAPI library block 546 to communicate via a telephony application programming interface (TAPI) via line 544. The TAPI library block 546 is in direct communication with a modem 548 having a POTS phone line connection 550. In this way, the data manager 534 can report to a service provider which advertisements a particular user has viewed or selected (i.e., advertisement tracking). In addition, the data manager 534 communicates with a service/CA manager 552, which sets tuning priorities/controls, manages conditional access messages, and resolves messages relating to program tuning information that are exchanged via a third data path 554 to/from the tuner driver block 502.

The SDP + data store 540 is a database that contains all the current SDP + record information. The SDP + data store 540 passes DPG data store queries for data item description and display formatting information to a data program guide block 558 on line 556. The data program guide block 558 contains the dynamic HTML pages, including graphic content, that is currently being broadcast by the satellite communication system 100. The data program guide block 558 may retrieve files from the local file system 541 via a fourth data path 560. The SDP + data store 540 may also pass enriched TV data store queries 562 to an enriched TV function 564 that serves to map a channel to an IP address and a port. The enriched TV function 564 may further receive tuning control information, via line 566, from a tuning control interface 504 and may, accordingly, pass screen formatting information to the TV control block 504 on line 570. The enriched TV function 564 and the data program guide block 558 may exchange information with a browser application 572 along a first data path 574 and a second data path 576, respectively.

As described in section II of this disclosure, a user may interact with the PPG to invoke the download of file data (e.g., by selecting various "software" links). The PPG utilizes SDP+ records to perform this task. The SDP + records are stored in the SDP + data store 540. At the scheduled time of reception, the data manager 534, which holds schedule information, examines the records in the SDP + data store 540 to determine the multicast IP address on which the download will be broadcast. After the data manager 534 has determined the multicast IP address, the service manager 552 looks to the BARP table, which may be stored on the local file system 541, to determine tuning information for the multicast IP address found in the SDP+ record. For example, a broadcast of Quicken '98™ software may be broadcast on multicast IP address 1.2.3.4 and that multicast IP address may correspond to tuning information indicating transponder two SCID five, according to the BARP table. Once the tuning information is determined, it is passed to the service/CA manager 552, which tunes the tuner driver 502 to, for example, transponder two, SCID five.

File information received by the tuner 502 is passed to the tuner NDIS driver 522, where it is converted into IP data and passed to the Winsock® 526, via line 524. The Winsock®, in turn, passes the IP data to the data manager 534, which performs the BFDP function on the IP data to recover the data for Quicken '98™. The data associated with Quicken '98™ is stored on the local file system 541 for later use. Any data determined by BFDP to be missing from the received Quicken '98™ file will be obtained on subsequent broadcasts of the file. When the complete file has been stored on the local file system 541, Quicken '98™ is complete and ready to run.

### V. Data Packets

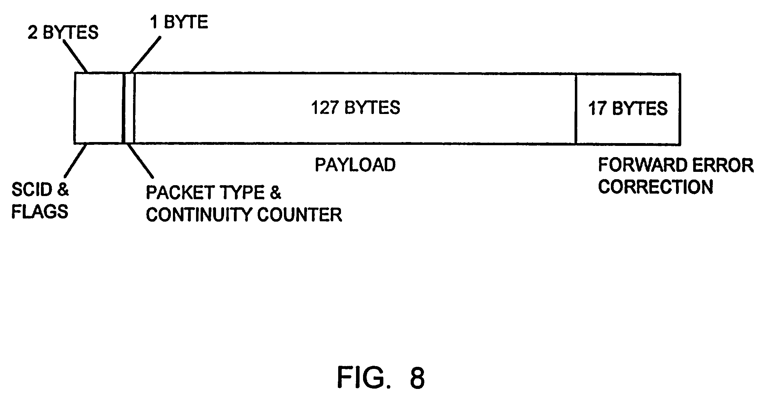

FIG. 8 is a diagram illustrating a preferred type of transport data packet that may be transmitted via the system 100 shown in FIG. 1 and processed by the receiver station 106 shown in FIGS. 22 and 23. More specifically, the data packet may be coupled to the receiver station shown in FIG. 7 via line 510. The preferred data packet shown in FIG. 8 is in the format and of the type used in the DirecTV® digital broadcast system. As shown, each data packet may be, for example, 147 bytes long. The first two bytes (a byte is made up of 8 bits) of information contain the SCID and flags. As previously stated, the SCID (service channel ID) is a unique 12-bit number that uniquely identifies the packet's service channel. The flags are made up of four bits used primarily to control whether or not the packet is encrypted and, if encrypted, which key to use to decrypt the packet. The third byte of information is made up of a four-bit packet type indicator and a four-bit continuity counter. The next 127 bytes of information consists of the "payload" data, which is the actual usable information sent from the program provider. The payload can be any of the various types of data sent over the airlink, including video, audio, conventional program guide data, data related to the layout/format/content of the template pages of the present invention, conditional access data, webcasting data, software download data, etc.

### VI. Audio/Video Processing

The architecture shown in FIG. 7 may be used to receive audio and video signals associated with television programming. When a user desires to watch television programming, the service/CA manager 552 tunes the tuner driver 502 to the appropriate transponder and SCID or SCIDs to receive the appropriate programming signals. The received signals are passed to the MPEG video driver 506 via line 512. The MPEG video driver 506 appropriately processes the received signals to obtain audio and video signals that are passed to the video VGA driver 508, which, in turn, passes the signals to a monitor for display.

### VII. Data Processing

### A. Protocol Stack/Broadcast File Download Protocol (BFDP)

As discussed in section I of this disclosure, the PPG of the present invention requires the presence of appropriate data at the receiver station 106. Although a variety of data processing techniques could be used in conjunction with the PPG of the present invention, BFDP, BARP, and SDP + are exemplary of preferred data processing methods. Respectively, these methods provide a way of reliably transferring file data in a one-way communication channel, resolving IP addresses into physical addresses, and announcing to the receiver station 106 how to display available data streams for selection, and when and how to tune to data streams selected by the user.

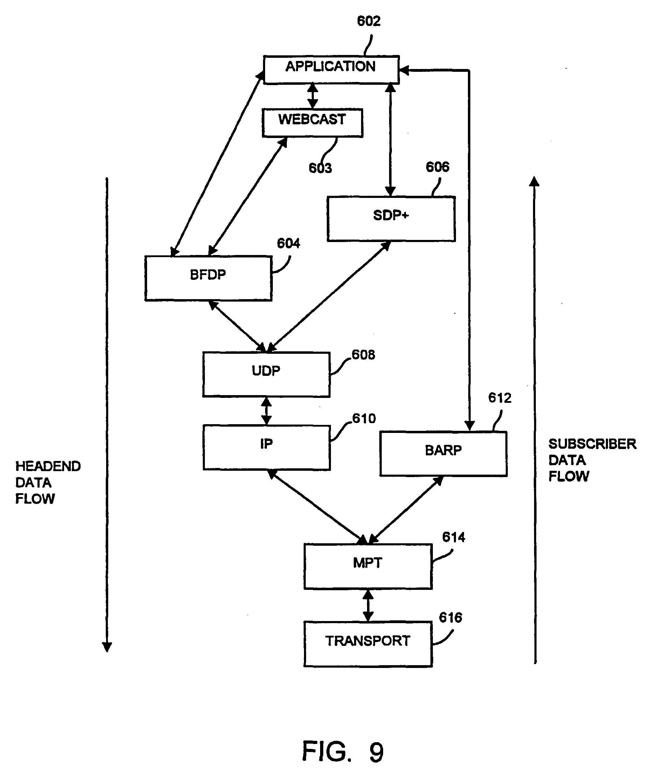

Illustrated in FIG. 9, is a preferred data flow through a protocol stack that utilizes the BFDP, BARP, and SDP + data processing methods. The transmission station 102 (or "headend") builds transport data packets for transmission in accordance with the headend data flow arrow. There are four primary data flow paths through the protocol stack at the transmission station 102. File data begins at an application layer 602 and is passed down through a BFDP layer 604, a UDP layer 608, an IP layer 610, and is encapsulated for transmission to the receiver station 106 by an MPT layer 614 and a transport layer 616. Webcast data begins at the application layer 602 and is passed down through a webcast layer 603, the BFDP layer 604, the UDP layer 608, the IP layer 610, the MPT layer 614, and the transport layer 616. SDP+ records begin at the application layer 602 and are passed down through an SDP + layer 606, the UDP layer 608, the IP layer 610, the MPT layer 614 and the transport layer 616. BARP information begins at the application layer 602 and is passed down through a BARP layer 612, the MPT layer 614 and the transport layer 616. Transport packets received at the receiver station 106 (or "subscriber") are resolved into BARP information, SDP + records, webcast information, and file data by passing the received packets up through the protocol stack in the direction indicated by the subscriber data flow arrow.

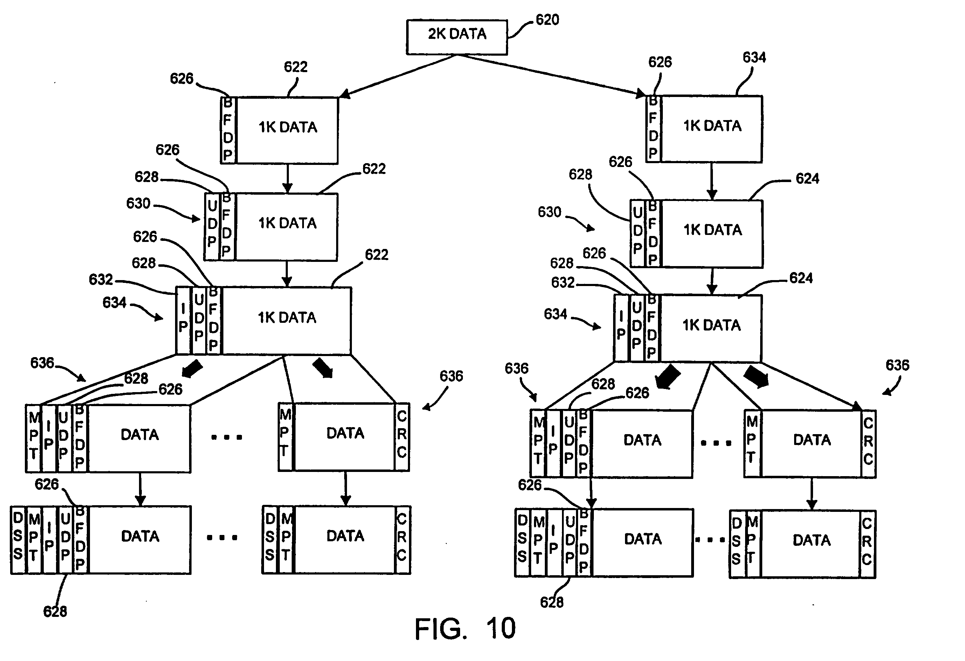

Illustrated in FIG. 10 is an exemplary method of processing a data packet using the protocol stack shown in FIG. 9. FIGS. 9 and 10 are described is more detail below in connection with in-depth discussions regarding the BFDP, BARP, and SDP + data processing methods.

Downloading file data is especially difficult within the DTH system 100 (shown in FIG. 1) because the DTH system 100 does not provide a backchannel communication path from the receiver station 106 to the transmission station 102 (i.e., the communication path is a one-way path to the receiver station 106). The absence of a backchannel makes it impossible for the receiver station 106 to acknowledge to the transmission station 102 that a software file was completely received and error free. Additionally, the absence of a backchannel prevents the receiver station 106 from requesting rebroadcast of missing data from the transmission station 102. Although the communication channel associated with the DTH system 100 has a very low bit error rate, relatively long periods of signal interruption may occur. For example, snow or rain, either at the transmission station 102 or the receiver station 106 may cause the communication channels of the system 100 to fade, thereby causing received signal errors. Additionally, user activity, such as receiver station tuning or deactivation, may cause signal interruptions. If signal interruptions occur during the download of file data, the file data will be incomplete and inoperable.

One preferred method of addressing the difficulty associated with transmitting file data along a one-way communication path, such as that used by the PPG of the present invention, uses data carousels at the transmission station 102 that repeatedly broadcast the same file data to the receiver station 106 in conjunction with a data transfer protocol that is the subject of a co-pending, commonly assigned patent application serial no. filed on and entitled . The Broadcast File Download Protocol (BFDP) prepends a header to the file before transmission of the data packets. This header allows a download file to be reassembled from information received during one or more broadcasts of the same download file. Thus, if some file data is lost or corrupted during a first broadcast of the download file, BFDP allows the receiver station 106 to "fill in" any missing or corrupted file data with file data received during a subsequent broadcast of the same download file, thereby avoiding the constraint of having to receive an entire file without corruption/interruption during a single broadcast.

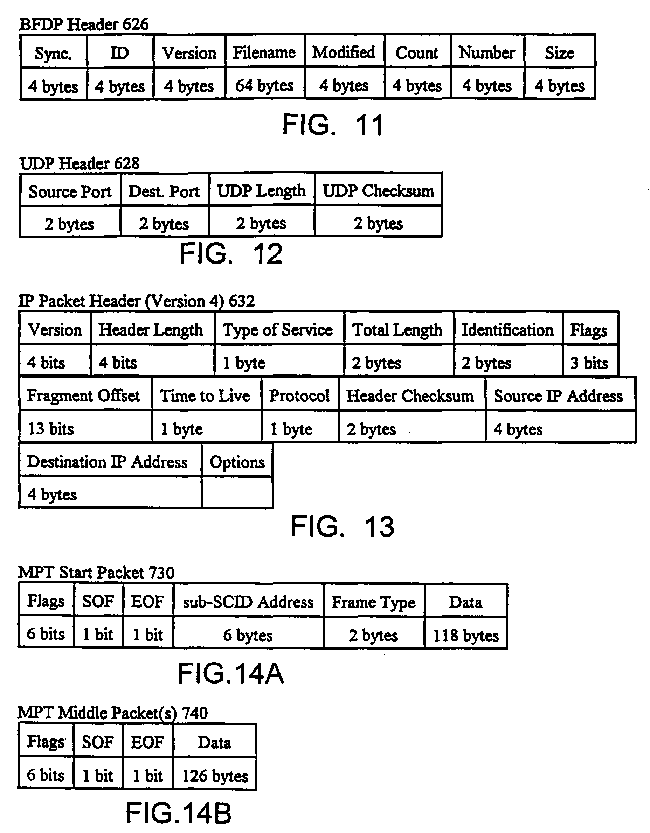

The details of BFDP will now be explained with reference to FIGS. 9 and 10. If a file (e.g., a website, a software file, etc.) is to be broadcast from the transmission station 102 to the receiver station 106, data from the application layer 602, such as webcast, is passed to the BFDP layer 604. For purposes of explanation of the BFDP, it will be assumed that a data file 620 having 2 kilobytes (2K) of data is to be transmitted. The data file 620 is received by the BFDP layer 604, which if necessary, breaks the data file 620 into smaller data fragments 622 and 624. For purposes of explanation it is assumed that the data file 620 is split into two 1K data fragments 622, 624 and that a BFDP header 626 is prepended to each of the data fragments 622, 624. The size of the fragments is a tradeoff between overhead and the probability of data loss. If low overhead is desired, the size of the data packet will be large with respect to the BFDP header on the data. However, if the probability of data loss is high, the size of the data packets should be made small to minimize the data lost if a single packet is lost. Typically, the probability of data loss is determined by channel characteristics. The remainder of the processing for each fragment is identical. A sample format for the BFDP header 626 is shown in FIG. 11.

The eight fields of the sample BFDP header 626 provide information concerning the number and order of the data fragments 622, 624 that are broadcast to make up the data file 620. Each field in the sample BFDP header 626 is represented by four bytes, except for filename, which is represented by sixty-four bytes. The Sync. field contains information that may be used to assist in identifying the header. An ID field is a representation of the object ID for the file being broadcast. The object ID may be used for data filtering at the receiver station 106. The Version field indicates the version of the BFDP used to create the present packet. Filename is sixty-four bytes of information used to indicate the filename and path where the data fragment is to be stored on the receiver station 106 (e.g., C:\downloads\xyz). Preferably, the filename field is used only for special files and is not generally used. For example, when webcast information is transferred, a HTTP header is used and the filename field is ignored. The Modified field denotes the last time the fragment was modified. Preferably, this representation is in UNIX time_t format. Count, Number, and Size fields refer to the number of fragments used to make up the original file data that is broadcast, the number of this fragment, and the size of this fragment, respectively. The count, number, and size fields are key pieces of information that allow BFDP to reconstruct a complete data file from multiple broadcasts of the data file. For example, a data file may be broken into 10 fragments and, during transmission, fragments 1-5 and 8-10 were received by the receiver station 106. On subsequent broadcasts of the data file, the receiver station 106 examines all of the BFDP headers on the received fragments and only stores the data packets indicated as fragments 6 and 7 in their BFDP headers, thereby filling in the received data file.

As shown in FIGS. 9 and 10, after the processing is complete at the BFDP layer 604, the resulting data packet is transferred to a UDP layer 608, which prepends a UDP header 628 to the packet. The UDP header 628, which is standard and well known in the art, is shown in FIG. 12. The UPD header 628 includes fields that denote source and destination ports for the data. That is, UDP header fields contain information indicating the application that is providing the data (source port) and the application that is to receive the data (destination port). At this point in the processing, the data packet is referred to as a UDP packet 630.

Data transferred to a computer through a connection is typically in an Internet protocol (IP) format, which is well known to those skilled in the art. Accordingly, the UDP packet 630 is passed to the IP layer 610, which in a well known manner, prepends an IP header 632 onto the UDP packet 630, thereby creating an IP packet 634. The IP header 632, which is shown in FIG. 13 denotes, inter alia, the IP addresses of the data source and destination computers. Information that is broadcast to a number of users preferably uses a multicast IP address. Alternatively, information may be addressed to specific users via a standard IP address.

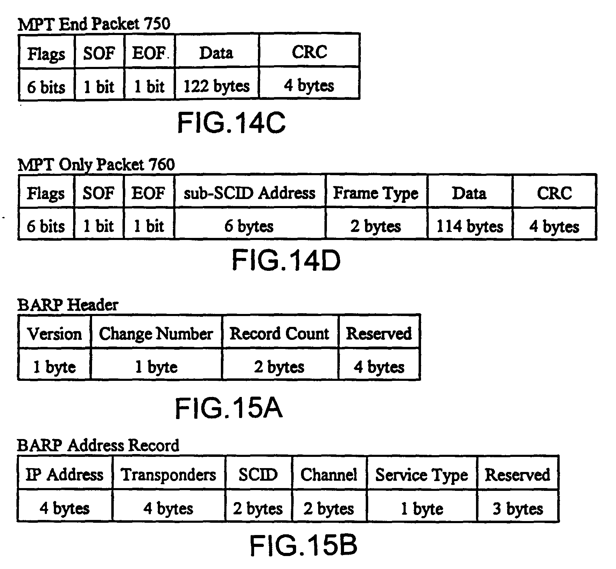

After the UDP packet 630 has been properly processed by the IP layer 610 to create the IP packet 634, the IP packet 634 is passed to an MPT layer 614. The MPT layer 614 processes the IP packet 634 to create an appropriate number of MPT packets 636. For example, in digital video broadcasts (DVB) the size of the MPT packets may be 185 bytes. Alternatively, the MPT packets may be 127 bytes long for other direct to home (DTH) applications. For use in the present system 20, each the MPT packets 636 is 127 bytes long including a header and data. The MPT layer uses a number of packet configurations, shown in FIGS. 14A - 14D, to create the 127 byte packets. If the IP packet 634 contains 114 bytes or less, only one MPT packet referred to as an "Only Packet" 760 needs to be created. The preferred format of the Only MPT packet 760 is shown in FIG. 14D. The Only packet 760 includes: a six bit flag field that is preferably reserved and set to all zeros, a one bit start of frame (SOF) field that indicates that this packet is the start of the frame, a one bit end of frame (EOF) field that indicates that this packet is the end of the frame. If the IP packet 634 contains 114 bytes or less, only one MPT packet 636 will be sent, therefore the Only packet header indicates that the Only packet 760 is the start of the frame and the end of the frame. The Only packet 760 may also include a field indicating the sub-SCID address of the packet, which preferably includes a two byte type code and a four byte type-dependent code. Preferably, the type code is 0x0100, which signifies that the last four bytes are the multicast group address to which this frame belongs. The Only packet 760 may also include a frame type field, which identifies the type of content in the MPT frame. Preferably, this field is used to indicate whether the frame is an IP frame or a BARP frame. Preferably, the frame type field is filled using Internet Assigned Number Authority (IANA) standard numbers. Further, the Only packet 760 may include a cyclic redundancy check (CRC), which is a 32-bit number computed over the entire MPT frame.

If the IP packet 634 is to be processed by the MPT layer 614 is longer than 114 bytes, Start 730, Middle 740, and End 750 MPT packets shown in FIGS. 14A - 14D are preferably used to process the IP packet 634. The headers of these packets use all combinations of the fields described in conjunction with the Only packet 760. As shown in FIG. 10, the first 118 bytes of the IP packet 634 are loaded into the MPT Start packet 730. The start header of the MPT packet denotes a MPT packet as the start of the frame by setting the SOF bit. If the IP packet 634 is larger than 244 bytes the appropriate number of Middle packets 740 will be filled with 126 byte sections of data from the IP packet 634. The SOF and EOF bits will not be set because the MPT packet is a middle packet. Numerous middle packets will be filled with the IP data until there is less than 122 bytes of data remaining in the IP packet 634. At this point an End packet 750, is filled with the last bytes of information and appended with a CRC. This method of using Only, Start, Middle, and End packets yields MPT packets that are all exactly 127 bytes long.

After each IP packet 634 has been converted to one of the MPT packets 636, each of the MPT packets 636 is passed to the transport layer 616. The transport layer 616 places each 127 byte packet into the 127 byte payload section of a transport data packet (shown in FIG. 8). The complete transport data packet is passed to the uplink frequency converter 118 of FIG. 1 and broadcast to the receiver station 106.

As the receiver station 106, which is tuned to a particular transponder and SCID, receives packets of information, the data packets traverse up through the protocol stack as indicated by the subscriber data flow indicated on FIG. 9. The transport layer removes the payload from each transport packet. After the appropriate processing, the payload is passed to the MPT layer 614, which strips the MPT header from the packet and assembles all relevant data from MPT packets to assemble the IP data frame. The IP layer 610 strips the IP header 632 from the data, performs well-known IP processing functions, and routes the data to the UDP layer 608. The UDP layer 608 strips off the UDP header 628 and routes the remaining information to the proper application (port) as denoted by the UDP header. The BFDP layer 604 strips the BFDP header 626 from the data packets and, using the information in the headers, reassembles the data contained in the BFDP packets into the data file 620 as sent by the transmission station 102. Additionally, if necessary, the receiver station 106 denotes missing data packets through examination of the BFDP headers. Thus, the PPG of the present invention may reassemble the original data file in accordance with the BFDP header fields at the receiver station 106 after multiple broadcasts of the original data file. That is, any missing data after the data is broadcast will be "filled in" with the appropriate data from subsequent broadcasts of the original data a file. For example, if a 1 megabyte (MB) file is broadcast and the receiver station 106 successfully acquires all but 1 kilobyte (KB) of the broadcast information, instead of having to reacquire all of the data that the receiver station 106 has already received, the receiver station 106 simply waits for and acquires the 1KB of data that it needs to complete the 1 MB file.

### B. Broadcast Address Resolution Protocol (BARP)

As referenced earlier, the broadcast address resolution protocol (BARP) layer 612 is required to resolve IP addresses into physical (i.e., satellite transport) addresses. BARP is the subject of a co-pending commonly assigned application entitled , filed on and bearing serial no. / . The BARP layer is coupled to the MPT layer 614 and is used to map a multicast source IP address to transport-specific tuning information. That is, BARP is a map that tells a receiver station 106 on which transponder or transponders and SCID or SCIDs, information from a particular source IP address may be found. For example, when a user selects information from the PPG, the receiver station 106 uses BARP to determine tuning parameters (e.g., transponder and SCID) for the information selected by the user. Preferably, BARP information is periodically sent on as many transponders as possible so that users have easy access to the most current BARP information.

BARP consists of a header followed by zero or more address records. BARP preferably uses MPT frame type 0x0806. FIGS. 15A and 15B represent the format of a BARP header and a BARP address record, respectively. The BARP header includes version, change number, record count and reserved fields. In this example, version is a 1 byte field that represents the version of the BARP format used to create the header and address record. Change number is a 1 byte field that is incremented each time anything in the header or any of the address records change. Record count is a 2 byte field that indicates the number of address records that follow this BARP header. The reserved field is a four byte field that may be used to provide system flexibility in the future.

The BARP address record, as shown in FIG. 15B, includes six fields. An IP address field contains a four byte representation of an IP address. Transponder is a bitmap field identifying the transponders on which the previously-noted IP address can be found. Each bit in the transponder field corresponds to a transponder. Set bits in the transponder field indicate the presence of the IP address on that transponder. For example, if the first bit is set (1) and the rest of the bits are clear (0) then the IP address listed in the IP address field is present only on the first transponder of the system. The SCID field denotes the 12 bit SCID that contains the information provided by the IP address listed in the first field of the header. Preferably, the four most significant bits are reserved. Channel is 10-bit channel number that is associated with the this SCID and transponder. For example, transponder two, SCID nine may correspond to channel 105. Preferably, the most significant 6 bits of the channel field are reserved for future use. Service type is the type and paradigm of the channel associated with the transponder and SCID in the address record. The reserved field is 3 bytes long and is preferably reserved for future system use. Information for channel and service type fields are preferably supplied by the broadcaster to satisfy tuning requirements of subscriber units.

While the BARP and BFDP protocol layers represent one preferred way of transmitting the information related to the PPG of the present invention, other transmission systems and methods may be substituted without departing from the spirit of the invention.

### C. SDP+ Records

Another difficulty faced in utilizing the wide variety and large amount of information transmitted within the DTH system 100 is providing a way for the PPG to efficiently find and process the various kinds of data that are available at various times within the multi-program data stream. One preferred method that allows the PPG of the present invention to efficiently find and process information for presentation to a user are "session description protocol plus" (SDP+) records. SDP+ records are the subject of a co-pending commonly assigned application entitled , filed on and bearing serial no. / .

An SDP + record is an announcement mechanism that includes a number of fields, which are assembled into a single record or file to provide information on available services such as webcasts, downloads, and streaming data or other services. The SDP + protocol is a combination of standard SDP fields and augmentations, or extensions, to the standard SDP protocol. Additional details regarding the standard SDP protocol may be found in RFC 2327. The standard fields of the SDP protocol that are used in the of the SDP + protocol include, protocol version, the owner/creator and session identifier (i.e., the IP address of the creator of the SDP record), the name of the SDP session (i.e., the name of the SDP record), a brief description of the session (i.e., what the SDP record is for), the multicast address on which the session is being broadcast, the start and end times of the broadcast, the repeat times of the broadcast, a list of Internet webpages that can provide additional information on the item that is going to be broadcast, what the port of the broadcast is (i.e., the UDP port of the broadcast), the type of broadcast (e.g., BFDP, Stream, Webcast or Intercast), sorting and filtering information.

As noted, an SDP + record may also contain information such as the time a particular service will be broadcast, the multicast IP address on which the service will be broadcast, the size of the file that will be broadcast, and information relevant to the PPG such as text or images that should be displayed to the user. Each download service (e.g., each webcast, each software download, etc.) has its own SDP+ record, which is broadcast to all subscribers to inform them of the information that is available for download. With reference to PPG information, SDP + records are used by the PC 128 to build particular sections of pages using selected information resident within the PC 128 (e.g., the basic page templates shown in FIGS. 2-5) and selected dynamic data that is received from a satellite in the form of SDP + records. When the user launches the interface into another state or page, the PPG builds the destination page as instructed by the templates and by the SDP + records. The page is then displayed on the user's PC monitor 130.

SDP + records also allow users to pre-select download content from descriptions of the content, then filter for that information as it arrives in the one-way data stream of the DTH system 100. The descriptions of the content may include extended SDP records including protocol version, name, times of broadcast, IP address, mandatory download status, ID number, run command, category, file size, text messages, channel, images, keywords, etc.

As previously mentioned, SDP + records also provide announcement information including content type, start time, duration, Internet address information, and actions to be taken on receipt of the information. Announcement management is critical to finding the data stream, discrete download or webcast information in the received transmission. SDP + records can be rescinded and modified, once they are present on the user's PC 128. SDP+ records can be used to indicate mandatory download events such as software updates. The system user (client) uses SDP + records to schedule program reception. After the client makes selections based on the SDP + record information, the receiver station 106 properly tunes itself to receive the selected information.

SDP + records are a combination of conventional SDP records and extensions to the conventional SDP records. Generally, the extensions to the standard SDP protocol consist of fields for linking different download services together, specifying if a download file is mandatory, archived or should be run upon download to the receiver station 106. The extensions also provide for specification and placement of graphics for the PPG, the notification of the user upon receipt of the SDP + record, and the recission of previously sent SDP + records. These unique extensions coupled with the standard SDP protocol yield the SDP + protocol used in conjunction with the PPG of the present invention. The details of the conventional SDP fields and the unique extensions of the present invention are best described in conjunction with the exemplary SDP+ records shown in FIGS. 16A-16D.

Referring now to FIGS. 16A-16D, fields indicating version (v), record ID (o), multicast IP address (c), time (t), and port (m) are required for all SDP+ records of any kind. Additionally, for any BFDP download the object ID BFDP code (a=key:) is needed. The run command (a = run:) is required for all streaming data downloads. For all streams having an entry in the MPG a channel link (a = channel) is required. Additionally, for all webcasts a URI address field (u = 〈uri〉) is required.

FIG. 16A is a sample SDP + record for streaming data, which is commonly referred to as a ticker. The field "v = 0" refers to the version of the SDP + protocol used to produce this SDP + record. The record ID, which is represented by "o," indicates the unique session ID for this particular record. Specifically, the session ID for this SDP+ record is 0001 and the version of this record is 17. The session ID is a way to refer to this particular SDP + record and 17 indicates that there have been 16 previous versions of this SDP + record before this version. The name of this session is represented by "s=Announcement Dump." However, it should be noted that the session name is arbitrary ASCII text that is used to identify the SDP + record. The field "c" represents the multicast IP address of this session and "/1" indicates that the Time To Live (TTL) value, which indicates the number of "hops" that a packet may make before it expires. Multicast IP addresses denote the IP address on which the information corresponding to the SDP + record will be broadcast. The multicast IP address is used in conjunction with the previously described BARP table to tune a subscriber's receiver station 106 to the appropriate transponder and SCID to receive the broadcast information. When a user makes a request to receive broadcast information using the PPG, the receiver station 106 determines the multicast IP address on which the information will be broadcast by looking to the SDP + record corresponding to the selection. Once the multicast IP address is determined, the receiver station 106 uses the BARP table to correlate the multicast IP address to a transponder and SCID. The receiver then appropriately tunes itself to the proper transponder and SCID to receive the broadcast information. Since streaming data or tickers are always running, the start and end times represented by "t = 0 0" indicate that the data service is constantly running and is permanent. The field "m =" indicates that the UDP port of the data is 3278 and the type of data is streaming data.

The SDP+ record shown in FIG. 16A includes "a=key:1," which indicates that the object ID for this SDP + record is 1. The object ID may be used for sorting or other functions. The object ID in the SDP + record matches the object ID sent in the BFDP header. The field "a = run: consoleticker" indicates that when the download is complete, an executable file named consoleticker should be started. The standard SDP field "a = keywds" is used to correlate SDP records to one another. For example, in the SDP + record shown in FIG. 16A "tsetup" is used to correlate this SDP + record with another SDP + record, such as a client download file.

FIG. 16B is an example SDP+ record for a file download. Similar to the ticker SDP+ record of FIG. 16A, the file download SDP+ record a file download specifies the version of the SDP + protocol used to produce the SDP + record, the record ID, the name of the session, the multicast IP address of the session, and the object ID of the session. Additionally, the SDP+ record shown in FIG. 16B specifies download times using a "t= 3079382400 3155745600," wherein the first number is the start time of the broadcast and the second number is the end time of the broadcast. The start and end times are specified in decimal network time protocol (NTP) format. The "r = 10m 10m 0" specifies the broadcast repetition of the broadcasts, wherein the first number indicates the interval between broadcasts, the second number indicates the duration of the broadcasts and the third number indicates the time offset between the broadcasts. The field "m = " indicates that the UDP port of the data is 3335 and the type of data is BFDP data. The SDP+ record shown in FIG. 16B further specifies the size of the file that is to be downloaded using the "a =fsz" command. The example file download SDP+ record specifies a file size of 980K. The file download SDP + record also specifies that this file is a mandatory download using the command "a = mandatory." That is, the receiver station must receive the data broadcast corresponding to this SDP + record during one of the broadcast times. The field "a = run:cataloginstall.exe" specifies that after the data associated with the SDP + record is received, the file cataloginstall.exe must be executed.

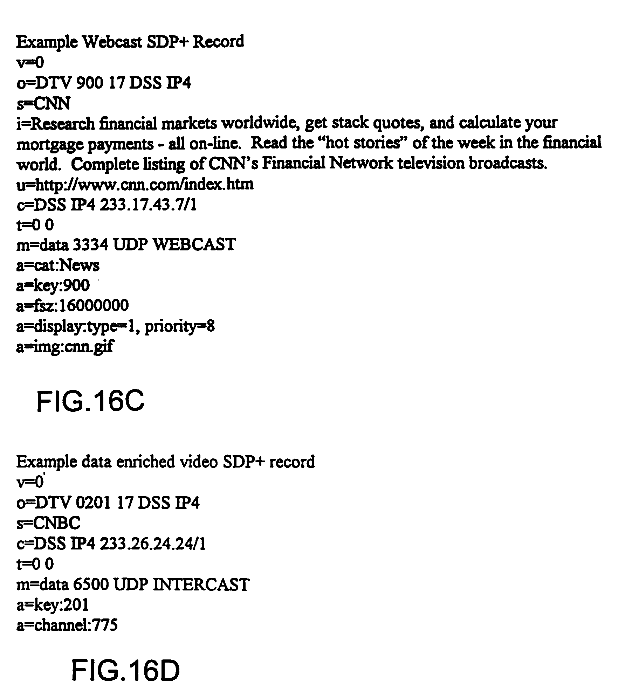

FIG. 16C is an example of an SDP+ record that is used to specify information pertinent to a webcast. In addition to using the fields previously described in conjunction with the file download and ticker SDP + records, the webcast SDP + record may use the session description field denoted as "i = ." This field is an ASCII text field that may be used to describe the content of a particular session or webpage. The session description field may be used as the program preview description represented as horizontal lines in a child window (not shown) that may pop-up when the system pointer rolls over a video image representing a program. Alternatively, the session description field of the SDP + record may be used in conjunction with SDP + records other than webcast SDP + records. The webcast SDP + record also includes a field denoting the URI of the webpage that is broadcast. The webcast SDP + record also uses the standard SDP extension "a = cat," which is used for sorting and filtering the SDP + records.

The webcast SDP + record uses the unique extension "a = display:type =" to indicate how the information content from the webcast will be displayed to the user. Additionally, the unique SDP+ field "a = img" is used to associate an image file (in this case cnn.gif) with a webcast. This image may be used as a thumbnail or any other representation of the content of the webcast. The image field and the display type field can work together to provide information for the PPG. Display type may be used to indicate on which page of the PPG the image specified in the image field must be placed. For example, type may be used to specify Movies, Sports, New, Data, or any other available category, each of which may be represented by a number. As shown in FIG 16C, type = 1 is specified, which may correspond to Movies. Accordingly the image cnn.gif will be placed on an appropriate page of the PPG as shown in FIG. 2. The specification of priority =8 denotes the particular location in which the cnn.gif image will be placed on the page. Referring to the movies page shown in FIG. 2, different priorities correspond to different locations in the arrangement of the images within the video/picture segment.

FIG. 16D is an example of an SDP + record that may be used to represent enriched TV. In addition to the field discussed in conjunction with the SDP + records, this SDP + record includes the field "a = channel." This field contains a 32-bit channel number that associates the data contained in the enriched video to channel content of a channel located in the program guide. The information contained in the enriched TV may be associated through a number of program guide channels.

### D. Webcast

As previously noted, the DTH system 100 broadcasts discrete downloads. These downloads are data items that have well-defined broadcast schedules and require detailed announcement information to locate the items in the received data. Examples of discrete downloads include software applications, such as spreadsheets, word processors or games. Webcasting is a special case of the discrete download. A webcast is an ongoing and repeating download of specially selected web content. The content is usually grouped by domain. Minimal scheduling is required for downloading webcast information. Multiple groups of content may be identified by the same identifier, thereby creating a one-to-many relationship among the items of interest. The system 100 may archive webpages pages on a the PC 128 for later viewing.

As webpage information is received by the subscriber unit it is stored for later use. In the preferred embodiment, webpage information is received in a compressed format and is stored directly (i.e., without extraction) by the subscriber unit. Preferably, the present invention uses an archiving scheme based on the PKWare™ PKZIP™ format. However, other alternative archiving formats may be used. If the archived files are compressed, the files are preferably extracted on demand using a PKWare™ extractor. If, however, the files are not compressed, any ZIP extractor may be used to extract and view the files. Preferably, the filenames used in the webcast archive are actually the uniform resource identifier (URI).

Preferably, webcast archive files have a dedicated filename extension. On any given data carousel, the contents of which is repeatedly broadcast, there must be exactly one main file for each webcast. Preferably, this file contains a snapshot of the entire website or website subset as selected for broadcast. Update archive files may be used to replace portions of the main file on the carousel. The subscriber unit stores all archive files in a subdirectory corresponding to the session ID of the webcast. Preferably, when a main file is received that is newer than the current main file in that directory, all other files in that directory will be removed and any links in the proxy server's cache map file for this webcast will be replaced with the URIs in the new main file.

In accordance with the present invention, the subscriber unit preferably maps uniform resource locators (URIs) to archive files. The map allows the subscriber unit to locate the archive file containing a URI that the user desires to view. When the subscriber unit receives the main file, the subscriber unit removes all files and cache map file links to the associated session prior to the receipt of the new main file. When the user requests a webpage, the subscriber unit extracts and decompresses the appropriate archive file data to a socket. This extraction is done in real time rather than extracting the entire archive file to disk. The subscriber unit also preferably has the capability to save partially downloaded files and acquire missing portions of the files on the next broadcast of the files as with all BFDP deliveries.

In accordance with the present invention, the headend unit is capable of manipulating the archived files using functions that archive files, determine the number of files in an archive file, return the name of a particular entry in an archive file, remove entries from an archive file, and merge a number of archive files into one archive file. The function that puts entries into an archive file includes a field denoting the file or files to be archived. Preferably, wildcard indicators may be used to specify a number of filenames for entry into the archive file. The archive function also preferably allows for a specification of a location to which the archive file should be written (e.g., a path name). In a preferred embodiment the archive function allows for specification of compression or no compression for the archived file. The archive function parses the specified files, reads the hypertext transport protocol (HTTP) header, and archives the specified files to an output file using the URI found in the HTTP header.

A function that counts the number of files in an archive is also preferably implemented at the headend unit. This function allows for a specification of an archive filename and returns the number of files stored in the archive file. Another desirable function is that of a function that returns the name of a file located in an archive file. This function allows for specification of an archive filename, the index or location of the file in question, the name of a buffer that will be filled with the name of the file in question, and the size of the specified buffer. Based on the inputs specified this function preferably returns the name of the file located in the specified index position in the specified archive file, the size of the file, and the length of the character string returned in the buffer size.

A function that erases portions of an archive file is also desirable. This erasing function allows for the specification of the archive file in question, the array index or indices to be erased from the archive file, and the number of elements specified in the index or indices to be erased. Preferably, a function is included that allows for the merging of two archive files. This merging function allows for the specification of two archive file names. One of the archive filenames is the file that is to be merged into the archive file bearing the other specified filename.

### VIII. Conclusion

Of course, it should be understood that a range of changes and modifications can be made to the preferred embodiment described above. It is therefore intended that the foregoing detailed description be regarded as illustrative rather than limiting and that it be understood that it is the following claims, including all equivalents, which are intended to define the scope of this invention.

## Claims

1. A computer based graphical user interface for facilitating the selection and display of transmitted audio, video, and data, comprising:
an active video segment adapted to display a currently tuned program;
a category segment listing various categories of programs or services available for viewing;
a video/picture segment having a plurality of video/picture areas associated with the category segment, wherein selection of a one video/picture area invokes the interface to command a receiver to tune to a particular program or service associated with the one video/picture area and to display the particular program in the active video segment; and
a graphic/link segment, wherein selection of a graphic/link invokes a function associated with the graphic/link.

2. The interface of claim 1, wherein the graphic/link segment includes a web graphic/link indicating that there is a web page related to at least one video/picture area from the plurality of video/picture areas.

3. The interface of claim 1, wherein the graphic/link segment includes grid-guide links that invoke the interface to display a program grid-guide.

4. The interface of claim 1, wherein the graphic/link segment includes video-clip links that invoke the display of video clips in the video/picture segment.

5. The interface of claim 1, wherein the graphic/link segment includes software links that invoke the download of software to the receiver.

6. The interface of claim 1, wherein the graphic/link segment includes software links that invoke the display of a data catalog that provides a schedule of when particular computer programs/web pages will be broadcast and available for download to the receiver.

7. The interface of claim 1, wherein the graphic/link segment includes links that invoke the purchase and display of a pay-per-view program.

8. The interface of claim 1, further comprising a page segment, whereby a user may select from one or more pages associated with a particular category.

9. The interface of claim 1, further comprising a time line associated with one or more of the video/picture areas.

10. The interface of claim 1, wherein the categories within the category segment listing include at least one from the group of categories consisting of movies, sports, news, kids & family, shopping, music, educational, entertainment, and favorites.

11. The interface of claim 1, wherein the video/picture segment has six 3:4 aspect ratio video picture areas.

12. The interface of claim 1, further including one or more auxiliary display areas.

13. A method for facilitating the selection and display of transmitted audio, video, and data, comprising:
displaying in a category segment a listing of the various categories of programs available for viewing;
displaying in an active video segment a video/service channel to which a receiver is currently tuned;
displaying a graphic/link segment containing a least one graphic/link that invokes a feature or service associated with the graphic/link;
displaying a video/picture segment having a plurality of video/picture areas associated with the category segment;
receiving an input from a user, the input being a selection of a one video/picture area selected from the plurality of video/picture areas;
commanding a receiver to tune to a particular program or service associated with the one video/picture area; and
displaying the particular broadcast program in the active video segment.

14. The interface of claim 13, wherein the graphic/link segment includes a web graphic/link indicating that there is a web page related to at least a one from the plurality of video/picture areas.

15. The interface of claim 13, wherein the graphic/link segment includes grid-guide links that invoke the interface to display a program grid-guide.

16. The interface of claim 13, wherein the graphic/link segment includes video-clip links that invoke the display of video clips in the video/picture segment.

17. The interface of claim 13, wherein the graphic/link segment includes software links that invoke the download of related software to the receiver.

18. The interface of claim 13, wherein the graphic/link segment includes software links that invoke the display of a data catalog that provides a schedule of when particular computer programs/web pages will be broadcast and available for download to the receiver.

19. The interface of claim 13, wherein the graphic/link segment includes links that invoke the purchase and display of a pay-per-view program.

20. The display of claim 13, further including the step of displaying a page segment, whereby a user may select from one or more pages associated with a particular category.

21. The display of claim 13, further including the step of displaying a time line associated with one or more of the video/picture areas.

22. The interface of claim 13, wherein the categories within the category segment listing include at least one from the group of categories consisting of movies, sports, news, kids & family, shopping, music, educational, entertainment, and favorites.

23. The interface of claim 13, wherein the video/picture segment has six 3:4 aspect ratio video picture areas.

24. The interface of claim 13, further including the step of displaying one or more auxiliary display areas.
